Europäisches Patentamt

European Patent Office

Office européen des brevets

(11) Veröffentlichungsnummer: **0 224 143**
**A1**

# EUROPÄISCHE PATENTANMELDUNG

(21) Anmeldenummer: 86115809.5

(22) Anmeldetag: 13.11.86

(51) Int. Cl.⁴: **B23K 9/02**

(30) Priorität: 25.11.85 DE 3541615

(43) Veröffentlichungstag der Anmeldung:
03.06.87 Patentblatt 87/23

(84) Benannte Vertragsstaaten:
**AT BE CH DE FR GB IT LI LU NL SE**

(71) Anmelder: **INTERATOM Gesellschaft mit beschränkter Haftung**
**Friedrich-Ebert-Strasse**
**D-5060 Bergisch Gladbach 1(DE)**

(72) Erfinder: **Iversen, Klaus**
**Sperberweg 15**
**D-5067 Kürten(DE)**
Erfinder: **Granner, Norbert, Dipl.-Ing.**
**Reginharstrasse 22**
**D-5060 Bergisch Gladbach(DE)**
Erfinder: **Jaskulski, Georg**
**Glerather Strasse 77**
**D-5060 Bergisch Gladbach(DE)**

(74) Vertreter: **Mehl, Ernst, Dipl.-Ing. et al**
**Postfach 22 01 76**
**D-8000 München 22(DE)**

(54) Verfahren und Vorrichtung zum Schweissen von hochreinen Rohrleitungen.

(57) Die Rohrleitungen bestehen insbesondere aus austenitischem Material. Sie werden mit einem außen umlaufenden Brenner geschweißt. In das Innere der Rohrleitung (1,2) wird eine verfahrbare Vorrichtung (3) geschoben, die zu beiden Seiten der Schweißnaht im Rohr (1,2) zentriert und abgedichtet (7) wird und während des Schweißens von einem Gasstrom durchströmt wird, der von den abgedichteten Enden der Vorrichtung zur Schweißnaht hin gerichtet ist.

## Verfahren und Vorrichtung zum Schweißen von hochreinen Rohrleitungen

Die vorliegende Erfindung betrifft ein Verfahren und eine Vorrichtung zum Schweißen von hochreinen Rohrleitungen nach dem Oberbegriff des ersten Anspruchs.

Beim Schweißen von hochreinen Rohrleitungen auf Baustellen, insbesondere für die Gasversorgung in der Halbleiterfertigung sollen auch kleinste Verunreinigungen, insbesondere solche aus elektrisch leitenden Materialien, vermieden werden, damit diese nicht mit dem Gasstrom in die Fertigung gelangen können. Eine Oberflächen abtragende Bearbeitung nach dem Schweißen ist nicht erwünscht, weil dabei wiederum lose Partikel entstehen, die später mit dem Gasstrom weiter transportiert werden.

Aufgabe der vorliegenden Erfindung ist ein Verfahren und eine Vorrichtung um die o. g. Probleme zu vermeiden.Gleichzeitig können mit dieser Vorrichtung in an sich bekannter Weise die beiden miteinander zu verschweißenden Rohrenden gegeneinander fixiert und zentriert werden. Weiterhin soll mit dieser Vorrichtung in ebenfalls an sich bekannter Weise das Innere der Rohrleitung in der Nähe der Schweißnaht inertisiert werden um Oxidationen der beim Schweißen erhitzten Rohrwand, insbesondere die sogenannten Anlauffarben zu vermeiden.

Zur Lösung dieser Aufgabe wird ein Verfahren nach dem ersten Anspruch vorgeschlagen. Mit diesem Verfahren gelingt es, wie Versuche inzwischen bewiesen haben, jegliche beim Schweißen entstehenden Verunreinigungen einschließlich der sogenannten Anlauffarben innerhalb des Rohres weitgehend zu vermeiden. Dabei ist es notwendig, während des Schweißens eine bestimmte Gasgeschwindigkeit im Ringspalt zwischen Rohrinnenwand und dem zylindrischen Körper einzuhalten.

Die dieser Erfindung zugrundeliegenden physikalischen Effekte sind vielfältiger Art.

Es besteht aber der Eindruck, daß sowohl die durch den Gasstrom gekühlten Flächen als auch die auf die Schweißnaht hin gerichteten Gasströme von Bedeutung sind.

Das Verfahren nach dem zweiten Anspruch dient zur Verstärkung des gewünschten Effektes und bewirkt zumindestens eine Drift der geladenen Teilchen von der Schweißnaht zum Körper.

Die im dritten Anspruch vorgeschlagene Vorrichtung hat sich als besonders zweckmäßig erwiesen. Sie sollte aus einem gut wärmeleitenden Material hergestellt werden und begrenzt den Verbrauch an inertem Spülgas, weil nur die unmittelbare Nähe der Schweißnaht von ihr erfasst wird, und das Inertgas nach Gebrauch wieder aufgefangen, gereinigt und neu verwendet werden kann.

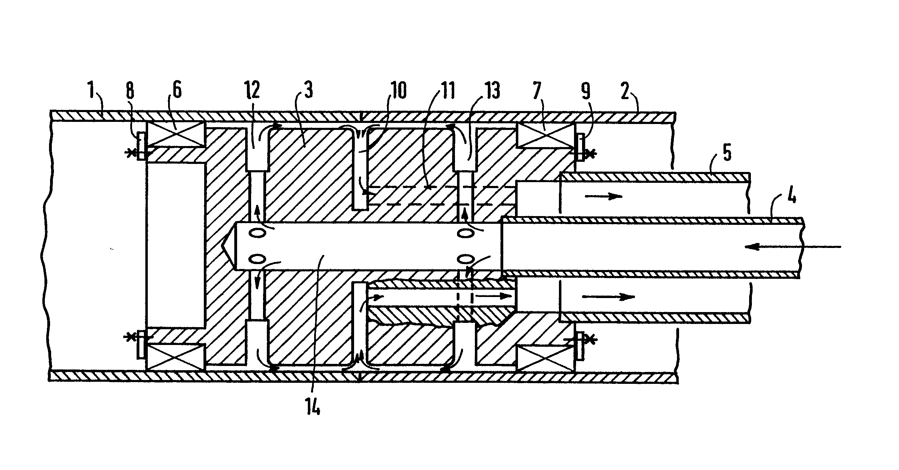

Die Figur zeigt ein Beispiel der erfindungsgemäßen Vorrichtung.

In die beiden miteinander zu verschweißenden Rohrenden 1 und 2 wird ein kompliziert geformter zylindrischer Körper 3 eingeführt, der mit einer konzentrischen Gasleitung aus einem inneren Schutzgaszuführungsrohr 4 und einem äußeren Absaugrohr 5 verbunden ist. An beiden Enden trägt der Körper 3 in besdonderen Eindrehungen ringförmige, aufblasbare Dichtungen 6 und 7, und die durch angeschraubte Ringscheiben 8 und 9 festgehalten werden und in nicht näher beschriebener Weise über dünne flexible Rohrleitungen von äußen gefüllt werden können. In der Nähe der Schweißnaht trägt der Körper 3 einen umlaufenden, ebenen Ringspalt, dessen Querschnitt so bemessen ist, daß in ihm etwa dieselbe Gasgeschwindigkeit aufrecht erhalten werden kann, wie in dem zylindrischen Ringspalt zwischen Körper 3 und den beiden Rohrenden 1 und 2. Dieser Absaugspalt 10 ist über mehere, gleichmäßig über den Umfang verteilte axiale Bohrungen 11 mit dem Absaugrohr 5 verbunden. Zwischen dem Absaugspalt 10 und den beiden aufblasbaren Dichtungen 6 und 7 ist je ein Ringspalt 12 und 13 angeordnet, die über mehrere radiale Bohrungen mit einer axialen Bohrung 14 verbunden sind, die an das Schutzgaszuführungsrohr 4 angeschlossen ist. Die Kanalquerschnitte sollten so bemessen sein, daß in den zylindrischen Ringspalten zwischen Körper 3 und den beiden Rohrenden 1 und 2 etwa die gleiche Strömungsgeschwindigkeit und damit auch der gleiche Druck eingehalten werden kann.

**Ansprüche**

1. Verfahren zum Schweißen von hochreinen Rohrleitungen insbesondere aus austenitischem Material mit einem außen umlaufenden Brenner und einer in das Innere der Rohrleitung verfahrbaren Vorrichtung ,
**gekennzeichnet durch** folgende Schritte:

a) Diese Vorrichtung wird axial auf die Schweißnaht ausgerichtet,

b) Diese Vorrichtung wird zu beiden Seiten der Schweißnaht im Rohr zentriert und abgedichtet,

c) Dieses Vorrichtung wird von einem Inertgasstrom durchströmt, der von den abgedichteten Enden der Vorrichtung zur Schweißnaht hin gerichtet ist und im Bereich der Schweißnaht abgesaugt wird, wobei gegnüber der Atmosphäre außerhalb der Rohrleitung eine einstellbare Druckdifferenz vorhanden ist.

2. Verfahren nach Anspruch 1,
**dadurch gekennzeichnet,**
daß die Vorrichtung gegenüber der Rohrleitung elektrisch isoliert ist und während des Schweißens auf einem von der Rohrleitung unterschiedlichen elektrischen Potential (t) gehalten wird.

3. Vorrichtung zum Schweißen von hochreinen Rohrleitungen mit einem außen umlaufenden Brenner und einen in das Innere der Rohrleitung verfahrbaren Körper (3), **dadurch gekennzeichnet,**

a) daß dieser Körper (3) von zylindrischer Form an beiden Enden je eine aufblasbare Dichtung (6, 7) enthält,

b) daß dieser Körper (3) in der Nähe der Schweißnaht einen umlaufenden Ringspalt (10) enthält,

c) daß jeweils zwischen der aufblasbaren Dichtung (6, 7) und dem im Bereich der Schweißnaht angeordneten Ringspalt (12, 13) eine Gaszufuhr vorhanden ist, die in dem zylindrischen Ringspalt zwischen Rohrinnenwand (1, 2) und Körper (3) mündet,

d) daß diese Gaszufuhr mit einer Gasleitung (4) von außerhalb der zu schweißenden Rohrleitung verbunden ist, und der Ringspalt (10) im Bereich der Schweißnaht mit einer zweiten Gasleitung (5) zur Abfuhr nach außerhalb der zu verschweißenden Rohrleitung verbindbar ist.

0 224 143

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | US-A-3 194 466  (O.T. DAVIS) <br> * vollständiges Dokument * | 1,2 | B 23 K    9/02 |
| A | | 3 | |
| | --- | | |
| A | DE-U-8 507 555  (K. TESCH) <br> * Figur * | 3 | |
| | --- | | |
| A | AT-B-  355 399  (H. SAUER) <br> * Ansprüche * | 1-3 | |
| | --- | | |
| A | DE-A-3 300 382  (J. ADAM) <br> * Figur 1 * | 1-3 | |
| | ----- | | |

**RECHERCHIERTE SACHGEBIETE (Int. Cl.4)**

B 23 K    9/00
B 23 K   37/00

Der vorliegende Recherchenbericht wurde für alle Patentansprüche erstellt.

| Recherchenort | Abschlußdatum der Recherche | Prüfer |
|---|---|---|
| BERLIN | 05-02-1987 | WUNDERLICH J E |